(19) Europäisches Patentamt
European Patent Office
Office européen des brevets

(11) **EP 4 015 281 A1**

(12) **EUROPÄISCHE PATENTANMELDUNG**

(43) Veröffentlichungstag:
**22.06.2022  Patentblatt 2022/25**

(21) Anmeldenummer: **21212688.2**

(22) Anmeldetag: **07.12.2021**

(51) Internationale Patentklassifikation (IPC):
**B60L 9/24** (2006.01)          **B60L 3/00** (2019.01)
**B60L 50/14** (2019.01)         **B60L 50/51** (2019.01)
**B60L 50/71** (2019.01)         **B60L 50/75** (2019.01)
**B60L 50/60** (2019.01)

(52) Gemeinsame Patentklassifikation (CPC):
**B60L 50/51; B60L 3/0069; B60L 9/24; B60L 50/66; B60L 50/71; B60L 50/75;** B60L 2200/26; B60L 2210/10; B60L 2210/20; B60L 2240/527; B60L 2250/10; B60L 2250/16

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.12.2020  DE 102020216215**

(71) Anmelder: **Siemens Mobility GmbH**
**81739 München (DE)**

(72) Erfinder: **Hassler, Stefan**
**91281 Kirchenthumbach, OT Neuzirkendorf (DE)**

(54) **FAHRZEUG, INSBESONDERE SCHIENENFAHRZEUG, MIT GLEICHSPANNUNGSZWISCHENKREIS**

(57)    Die Erfindung bezieht sich unter anderem auf ein Fahrzeug (10) mit einem Gleichspannungszwischenkreis (60) und zumindest einer Hilfseinrichtung (100), die einen Gleichspannungswandler (110) und eine mittels des Gleichspannungswandlers (110) an den Gleichspannungszwischenkreis (60) angeschlossene Spannungsquelle (120) aufweist. Erfindungsgemäß ist vorgesehen, dass an den Gleichspannungszwischenkreis (60) eine Erdschlusserkennungseinrichtung (200) angeschlossen ist, die umfasst: einen Spannungsteiler (210), der mit einem Mittenanschluss (M) auf Erdpotential (GND) liegt, eine an ein Teilerelement (R2) des Spannungsteilers (210) angeschlossene Spannungsmess-einrichtung (220), eine Modulationseinrichtung (240), die die Zwischenkreisspannung (Uzk) des Gleichspannungszwischenkreises (60) zeitlich moduliert und eine Auswerteinrichtung (230), die anhand eines die Spannung an dem Teilerelement (R2) angebenden Teilspannungswerts (Um) und einem die modulierte Zwischenkreisspannung (Uzk) am Gleichspannungszwischenkreis (60) angebenden modulierten Zwischenkreisspannungswerts (Uz) ermittelt, ob einer der Anschlüsse (Q1, Q2, 61, 62) der Spannungsquelle (120) oder des Gleichspannungszwischenkreises (60) von einem Erdschluss betroffen ist.

FIG 3

EP 4 015 281 A1

**Beschreibung**

Die Erfindung bezieht sich auf ein Fahrzeug mit einem Gleichspannungszwischenkreis und zumindest einer Hilfseinrichtung, die einen Gleichspannungswandler und eine mittels des Gleichspannungswandlers an den Gleichspannungszwischenkreis angeschlossene Spannungsquelle aufweist.

Fahrzeuge dieser Art sind beispielsweise im Bereich der Schienenfahrzeugtechnik bekannt. Die Hilfseinrichtung bzw. deren Spannungsquelle dient dazu, eine Versorgung des oder der Antriebsmotoren des Fahrzeugs mit elektrischer Energie auch bei Fahrten auf nichtelektrifizierten Streckenabschnitten zu ermöglichen.

Problematisch ist es, bei Gleichspannungszwischenkreisen, die erdpotentialfrei ausgestaltet sind, einen etwaigen Erdschluss zu erkennen, wenn dieser innerhalb der Hilfseinrichtung, beispielsweise an einem der Anschlüsse der Spannungsquelle der Hilfseinrichtung, auftritt.

Der Erfindung liegt die Aufgabe zugrunde, ein Fahrzeug anzugeben, bei dem Erdschlüsse besonders zuverlässig erkannt werden können.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass an den Gleichspannungszwischenkreis eine Erdschlusserkennungseinrichtung angeschlossen ist, die umfasst: einen Spannungsteiler, der mit einem Mittenanschluss auf Erdpotential liegt, eine an ein Teilerelement des Spannungsteilers angeschlossene Spannungsmesseinrichtung, eine Modulationseinrichtung, die die Zwischenkreisspannung des Gleichspannungszwischenkreises zeitlich moduliert und eine Auswerteinrichtung, die anhand eines die Spannung an dem Teilerelement angebenden Teilspannungswerts und einem die modulierte Zwischenkreisspannung am Gleichspannungszwischenkreis angebenden modulierten Zwischenkreisspannungswerts ermittelt, ob einer der Anschlüsse der Spannungsquelle oder des Gleichspannungszwischenkreises von einem Erdschluss betroffen ist.

Ein wesentlicher Vorteil des erfindungsgemäßen Fahrzeugs ist darin zu sehen, dass es dessen erfindungsgemäß vorgesehener Erdschlusserkennungseinrichtung ermöglicht, Erdschlüsse innerhalb der Hilfseinrichtung bzw. an der Spannungsquelle der Hilfseinrichtung sicher zu erkennen. Dies wird erfindungsgemäß durch die Spannungsmodulation im Bereich des Gleichspannungszwischenkreises ermöglicht: Die Spannungsmodulation lässt nämlich erkennen, ob - im Rahmen der Erdschlussüberwachung - tatsächlich eine zur Zwischenkreisspannung proportionale Spannung oder - im Falle eines Erdschlusses im Bereich der Hilfseinrichtung - stattdessen fälschlicherweise die Spannung an der Spannungsquelle oder eine dazu proportionale Spannung gemessen wird; diese durch die Erfindung ermöglichte Unterscheidung macht es nun wiederum möglich, Erdschlüsse allein innerhalb der Hilfseinrichtung von solchen, die sich auf oder zumindest auch auf den Gleichspannungszwischenkreis beziehen, zu unterscheiden. Auch können durch die Spannungsmodulation Erdschlüsse innerhalb der Hilfseinrichtung erkannt werden, die ohne die Spannungsmodulation - beispielsweise im Falle eines Teilerverhältnisses des Spannungsteilers, das dem Spannungsquotienten zwischen der Zwischenkreisspannung und der Spannung der Spannungsquelle entspricht - verborgen bleiben würden.

Als vorteilhaft wird es angesehen, wenn die Modulationseinrichtung die Zwischenkreisspannung des Gleichspannungszwischenkreises zeitlich rampenförmig oder sägezahnförmig moduliert.

Mit Blick auf den Einsatz bei Schienenfahrzeugen wird es als vorteilhaft angesehen, wenn die Modulationseinrichtung die Zwischenkreisspannung des Gleichspannungszwischenkreises periodisch jeweils von einem vorgegebenen Mindestwert linear bis zu einem vorgegebenen Maximalwert erhöht und anschließend von dem Maximalwert wieder auf den Mindestwert linear absenkt.

Der Mindestwert liegt vorzugsweise zwischen 1000 V und 1500 V. Der Maximalwert liegt vorzugsweise zwischen 1500 V und 2000 V.

Das Erhöhen und Absenken der Zwischenkreisspannung erfolgt vorzugsweise mit derselben Flankensteilheit. Bevorzugte Flankensteilheiten liegen im Bereich zwischen ???/Sekunde und ???/ Sekunde (HERR HASSLER, bitte ergänzen)

Die Auswerteinrichtung erzeugt vorzugsweise ein einen Erdschluss anzeigendes Erdschlusssignal, wenn sich der Teilspannungswert über ein vorgegebenes Maß hinaus nicht proportional zum Zwischenkreisspannungswert verhält.

Besonders vorteilhaft ist es, wenn die Auswerteinrichtung ein einen Erdschluss anzeigendes Erdschlusssignal erzeugt, wenn die zeitliche Ableitung des Teilspannungswerts Null beträgt oder eine vorgegebene Schwelle unterschreitet. Eine zeitliche Ableitung von Null ist ein typisches Indiz dafür, dass ein Erdschluss innerhalb der Hilfseinrichtung aufgetreten ist, zumindest dann, wenn der Teilspannungswert selbst größer als Null ist.

Auch ist es vorteilhaft, wenn die Auswerteinrichtung ein einen Erdschluss anzeigendes Erdschlusssignal erzeugt, wenn gilt:

$$\left| \frac{Um}{Uzk} - \frac{R1}{R1+R2} \right| > S1$$

wobei R1 und R2 Widerstandswerte des Spannungsteilers, Uzk die Zwischenkreisspannung, Um den Teilspannungswert und S1 einen Schwellenwert, der vorzugsweise kleiner als 10 Volt ist, bezeichnen.

Bei einer besonders bevorzugten Ausgestaltung ist vorgesehen, dass ein erster Anschluss der Spannungsquelle und ein erster Anschluss des Gleichspannungszwischenkreises auf unterschiedlichem Potential liegen und ein zweiter Anschluss der Spannungsquelle und ein zweiter Anschluss des Gleichspannungszwischenkreises auf einem gemeinsamen Gemeinschaftspotential liegen.

Insbesondere bei der letztgenannten Ausgestaltung ist es vorteilhaft, wenn der Teilspannungswert die Spannung zwischen dem Erdpotential und dem Gemeinschaftspotential anzeigt.

Die Auswerteinrichtung prüft vorzugsweise, ob der Teilspannungswert dem Zwischenkreisspannungswert gleicht oder zumindest in einem vorgegebenen Maße ähnelt. Die Auswerteinrichtung erzeugt vorzugsweise ein Warnsignal, das anzeigt, dass der erste Anschluss des Gleichspannungszwischenkreises von einem Erdschluss betroffen ist, wenn der Teilspannungswert dem Zwischenkreisspannungswert gleicht oder in einem vorgegebenen Maße ähnelt.

Die Auswerteinrichtung prüft vorzugsweise, ob sich der Teilspannungswert und der Zwischenkreisspannungswert nicht proportional verhalten, und erzeugt vorzugsweise ein Warnsignal, das anzeigt, dass der erste Anschluss der Spannungsquelle von einem Erdschluss betroffen ist, wenn dies der Fall ist, sich also der Teilspannungswert und der Zwischenkreisspannungswert nicht proportional verhalten.

Die Auswerteinrichtung prüft vorzugsweise, ob die zeitliche Ableitung des Teilspannungswerts nach der Zeit Null beträgt oder zumindest kleiner als eine vorgegebene Schwelle ist, und erzeugt vorzugsweise ein Warnsignal, das anzeigt, dass der erste Anschluss der Spannungsquelle von einem Erdschluss betroffen ist, wenn dies der Fall ist, also die zeitliche Ableitung des Teilspannungswerts nach der Zeit Null beträgt oder zumindest kleiner als die vorgegebene Schwelle ist.

Das letztgenannte Warnsignal, das anzeigt, dass der erste Anschluss der Spannungsquelle von einem Erdschluss betroffen ist, wird vorzugsweise nur dann erzeugt, wenn der Teilspannungswert als solcher größer als Null, insbesondere größer als eine vorgegebene Schwelle, ist.

Die Auswerteinrichtung prüft vorzugsweise, ob der Teilspannungswert Null beträgt oder zumindest kleiner als eine vorgegebene Schwelle ist, und erzeugt vorzugsweise ein Warnsignal, das anzeigt, dass das Gemeinschaftspotential von einem Erdschluss betroffen ist, wenn dies der Fall ist, also der Teilspannungswert Null beträgt oder zumindest kleiner als die vorgegebene Schwelle ist.

Die Modulationseinrichtung moduliert die Zwischenkreisspannung vorzugsweise durch Ansteuerung des Gleichspannungswandlers.

Alternativ oder zusätzlich kann in vorteilhafter Weise vorgesehen sein, dass die Modulationseinrichtung die Zwischenkreisspannung durch Ansteuerung eines an den Gleichspannungszwischenkreis angeschlossenen Umrichters, über den ein Antriebsmotor an den Gleichspannungszwischenkreis angeschlossen ist, moduliert.

Alternativ oder zusätzlich kann in vorteilhafter Weise vorgesehen sein, dass die Modulationseinrichtung die Zwischenkreisspannung durch Ansteuerung eines an den Gleichspannungszwischenkreis angeschlossenen Vierquadrantenstellers, über den ein Transformator an den Gleichspannungszwischenkreis angeschlossen ist, moduliert.

Die Anschlüsse des Gleichspannungszwischenkreises sind im fehlerfreien Zustand vorzugsweise potentialfrei.

Die Spannungsquelle umfasst vorzugsweise zumindest eine Brennstoffzelle oder ist vorzugsweise durch eine solche gebildet.

Alternativ oder zusätzlich kann in vorteilhafter Weise vorgesehen sein, dass die Spannungsquelle durch eine Batterie gebildet ist oder eine solche umfasst.

Die Erfindung bezieht sich darüber hinaus auf ein Verfahren zur Erdschlussüberwachung eines Gleichspannungszwischenkreises eines Fahrzeugs, an den zumindest eine Hilfseinrichtung, die einen Gleichspannungswandler und eine mittels des Gleichspannungswandlers an den Gleichspannungszwischenkreis angeschlossene Spannungsquelle aufweist, angeschlossen ist.

Erfindungsgemäß ist vorgesehen, dass ein Spannungsteiler mit einem Mittenanschluss auf Erdpotential liegt, ein die Spannung an einem Teilerelement des Spannungsteilers angebender Teilspannungswert gemessen wird, die Zwischenkreisspannung des Gleichspannungszwischenkreises zeitlich moduliert wird, und anhand eines die Spannung an dem Teilerelement angebenden Teilspannungswerts und einem die modulierte Zwischenkreisspannung am Gleichspannungszwischenkreis angebenden modulierten Zwischenkreisspannungswerts ermittelt wird, ob einer der Anschlüsse der Spannungsquelle oder des Gleichspannungszwischenkreises von einem Erdschluss betroffen sind.

Bezüglich der Vorteile des erfindungsgemäßen Verfahrens und dessen vorteilhafter Ausgestaltungen sei auf die obigen Ausführungen im Zusammenhang mit dem erfindungsgemäßen Fahrzeug und dessen vorteilhafter Ausgestaltungen verwiesen.

Die Erfindung wird nachfolgend anhand von Ausführungsbeispielen näher erläutert; dabei zeigen beispielhaft

Figur 1    ein Ausführungsbeispiel für ein erfindungsgemäßes Schienenfahrzeug, bei dem eine Modulation der Zwischenkreisspannung eines Gleichspannungszwischenkreises durch eine Ansteuerung eines Gleichspannungswandlers erfolgt,

Figur 2    ein Ausführungsbeispiel für eine zeitliche Modulation der Zwischenkreisspannung,

Figur 3     das Ausführungsbeispiel gemäß Figur 1 bei einem Erdschluss,

Figur 4     ein Ausführungsbeispiel für ein erfindungsgemäßes Schienenfahrzeug, bei dem eine Modulation der Zwischenkreisspannung eines Gleichspannungszwischenkreises durch eine Ansteuerung eines Vierquadrantenstellers erfolgt, und

Figur 5     ein Ausführungsbeispiel für ein erfindungsgemäßes Schienenfahrzeug, bei dem eine Modulation der Zwischenkreisspannung eines Gleichspannungszwischenkreises durch eine Ansteuerung eines zwischen einen Antriebsmotor und den Gleichspannungszwischenkreis geschalteten Umrichters erfolgt.

In den Figuren werden der Übersicht halber für identische oder vergleichbare Komponenten stets dieselben Bezugzeichen verwendet.

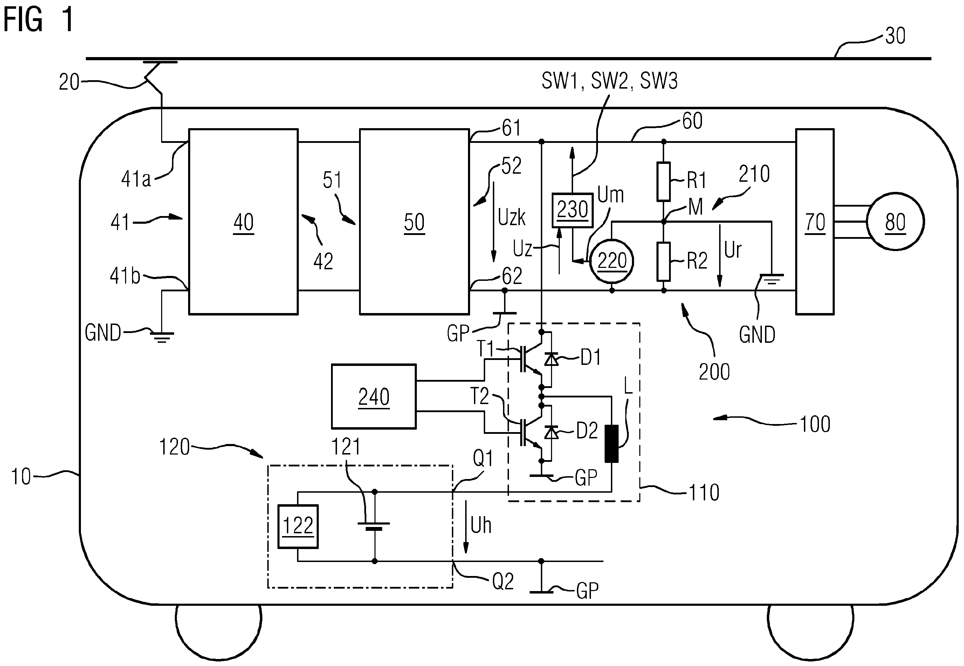

Die Figur 1 zeigt ein Ausführungsbeispiel für ein Schienenfahrzeug 10, das über einen Stromabnehmer 20 mit einem externen Energieversorgungsnetz 30 verbunden werden kann, sofern die vom Schienenfahrzeug 10 befahrene Strecke mit einem solchen externen Energieversorgungsnetz 30 ausgestattet ist.

Der Stromabnehmer 20 steht mit einem Anschluss 41a auf einer ersten Anschlussseite 41 eines Transformators 40 in Verbindung. Ein zweiter Anschluss 41b der ersten Anschlussseite 41 des Transformators 40 liegt auf Erdpotential GND.

Eine zweite Anschlussseite 42 des Transformators 40 ist an eine erste Anschlussseite 51 eines Vierquadrantenstellers 50 angeschlossen. Eine zweite Anschlussseite 52 des Vierquadrantenstellers 50 steht mit einem Gleichspannungszwischenkreis 60 in Verbindung, der einen ersten Anschluss 61 und einen zweiten Anschluss 62 umfasst. Zwischen den beiden Anschlüssen 61 und 62 liegt eine Zwischenkreisspannung Uzk.

An die beiden Anschlüsse 61 und 62 des Gleichspannungszwischenkreises 60 ist ein Umrichter 70 angeschlossen, der den Gleichspannungszwischenkreis 60 mit einem oder mehreren Antriebsmotoren 80 des Schienenfahrzeugs 10 verbindet.

Um einen Betrieb des Schienenfahrzeugs 10 auch auf Strecken zu ermöglichen, die nicht mit dem externen Energieversorgungsnetz 30 ausgestattet sind, weist das Schienenfahrzeug 10 eine Hilfseinrichtung 100 auf, die einen Gleichspannungswandler 110 und eine Spannungsquelle 120 umfasst.

Der Gleichspannungswandler 110 weist zwei Transistoren T1 und T2 sowie zwei dazu antiparallel geschaltete Freilaufdioden D1 und D2 und eine Induktivität L auf. Der Gleichspannungswandler 110 ist auf einer ersten Anschlussseite zu den beiden Anschlüssen 61 und 62 des Gleichspannungszwischenkreises 60 parallel geschaltet.

Der zweite Anschluss 62 des Gleichspannungszwischenkreises 60 und der Emitteranschluss des in der Figur 1 unteren Transistors T2 des Gleichspannungswandlers 110 liegen zusammen auf einem Gemeinschaftspotential GP, das im fehlerfreien Fall vom Erdpotential GND getrennt ist.

Eine zweite Anschlussseite des Gleichspannungswandlers 110 ist mit einer Spannungsquelle 120 verbunden, die allein durch eine oder mehrere Batterien 121 gebildet sein kann, allein durch eine oder mehrere Brennstoffzellen 122 gebildet sein kann oder - wie in Figur 1 gezeigt - ein oder mehr Batterien 121 sowie ein oder mehr Brennstoffzellen 122 enthalten kann.

Die zwischen den beiden Anschlüssen Q1 und Q2 der Spannungsquelle 120 anliegende Spannung ist in der Figur 1 mit dem Bezugszeichen Uh gekennzeichnet. Der zweite Anschluss Q2 der Spannungsquelle 120 liegt auf dem Gemeinschaftspotential GP, auf dem auch der zweite Anschluss 62 des Gleichspannungszwischenkreises 60 und der Emitteranschluss des Transistors T2 des Gleichspannungswandlers 110 liegen.

Im fehlerfreien Betrieb bzw. im Falle ohne unerwünschten Erdschluss sind die beiden Anschlüsse 61 und 62 des Gleichspannungszwischenkreises 60 sowie auch die anderen internen Anschlüsse des Gleichspannungswandlers 110 und der Spannungsquelle 120 jeweils erdpotentialfrei.

Um einen Erdschluss innerhalb des Gleichspannungszwischenkreises 60 oder im Bereich der Hilfseinrichtung 100 zu erkennen, ist das Schienenfahrzeug 10 mit einer Erdschlusserkennungseinrichtung 200 ausgestattet. Die Erdschlusserkennungseinrichtung 200 umfasst einen Spannungsteiler 210 mit zwei in Reihe geschalteten ohmschen Teilerelementen R1 und R2 und einem dazwischen liegenden Mittenanschluss M. Der Mittenanschluss M des Spannungsteilers 210 ist mit Erdpotential GND verbunden.

Die Erdschlusserkennungseinrichtung 200 umfasst darüber hinaus eine Spannungsmesseinrichtung 220, die die Teilspannung Ur zwischen dem Mittenanschluss M und dem zweiten Anschluss 62 des Gleichspannungszwischenkreises 60 und damit zwischen dem Erdpotential GND und dem Gemeinschaftspotential GP unter Bildung eines Teilspannungswertes Um misst.

Die Erdschlusserkennungseinrichtung 200 umfasst außerdem eine Auswerteinrichtung 230, die anhand des von der Spannungsmesseinrichtung 220 erzeugten Teilspannungswertes Um und eines die Zwischenkreisspannung Uzk im Gleichspannungszwischenkreis 60 angebenden Zwischenkreisspannungswertes Uz prüft, ob der Gleichspannungszwischenkreis 60 und/oder die Hilfseinrichtung 100 von einem Erdschluss betroffen sind; die Arbeitsweise der Auswerteinrichtung 230 wird weiter unten noch näher im Detail erläutert.

Die Erdschlusserkennungseinrichtung 200 ist darüber hinaus mit einer Modulationseinrichtung 240 ausgestattet, die bei dem Ausführungsbeispiel gemäß Figur 1 mit dem Gleichspannungswandler 110 zusammenarbeitet und diesen bzw. dessen Transistoren T1 und T2 derart ansteuert, dass die Zwischenkreisspannung Uzk am Gleichspannungszwischenkreis 60 zeitlich moduliert ist, also im zeitlichen Verlauf nicht konstant ist, sondern schwankt. Die Schwankung kann beispielsweise durch eine sich im zeitlichen Verlauf abwechselnde Energieaufnahme oder Energieabnahme der Batterie 121 bewirkt werden.

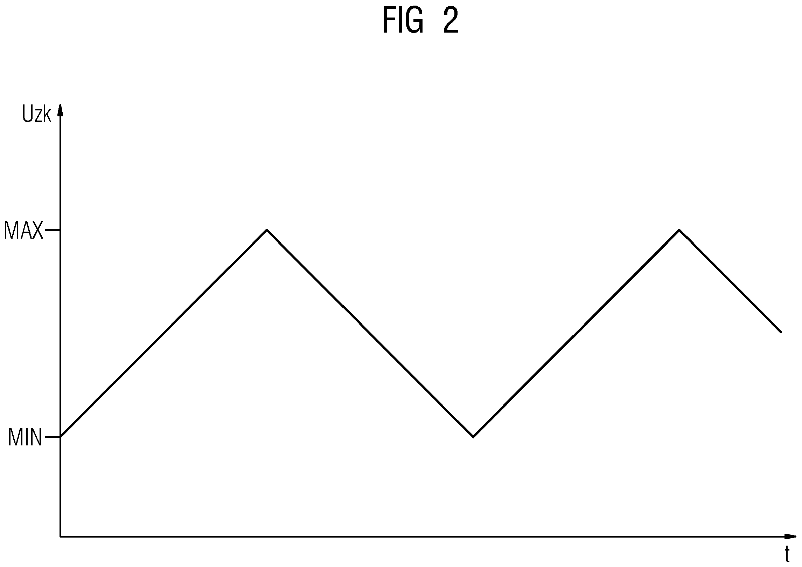

Besonders vorteilhaft ist es, wenn die Modulation der Zwischenkreisspannung Uzk zeitlich linear ausgeführt ist, wie dies beispielhaft in der Figur 2 gezeigt ist.

Die Figur 2 zeigt den Verlauf der Zwischenkreisspannung Uzk über der Zeit t im Falle einer zeitlich rampenförmigen Modulation. Die Zwischenkreisspannung wird periodisch jeweils von einem vorgegebenen Mindestwert MIN, der vorzugsweise zwischen 1000 V und 1500 V liegt, linear bis zu einem vorgegebenen Maximalwert MAX, der vorzugsweise zwischen 1500 V und 2000 V liegt, erhöht und anschließend von dem Maximalwert MAX wieder auf den Mindestwert MIN linear abgesenkt. Das Erhöhen und Absenken der Zwischenkreisspannung Uzk erfolgt vorzugsweise mit derselben Flankensteilheit.

Die Modulation der Modulationseinrichtung 240 bezieht sich lediglich auf die Zwischenkreisspannung Uzk im Gleichspannungszwischenkreis 60; die an der Spannungsquelle 120 anliegende Spannung Uh ist von der Modulation nicht betroffen, da diese von der Batterie 121 der Spannungsquelle 120 stabilisiert bzw. konstant gehalten wird.

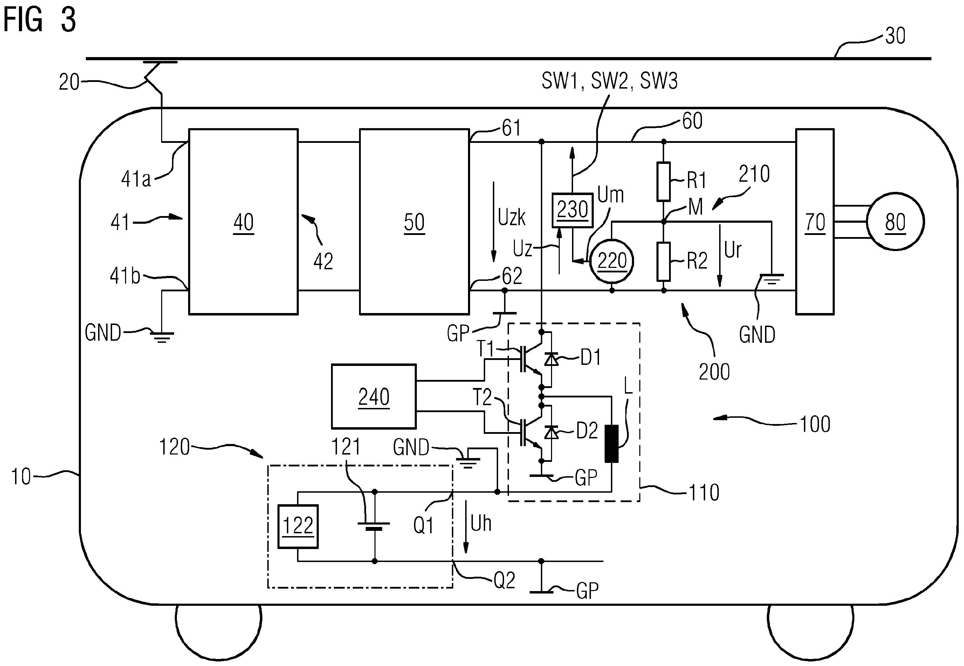

Nachfolgend soll nun im Zusammenhang mit der Figur 3 erläutert werden, wie eine Erdschlusserkennung im Bereich der Hilfseinrichtung 100, konkret am ersten Anschluss Q1 der Spannungsquelle 120, von der Auswerteinrichtung 230 erkannt werden kann:

Kommt es zu dem in der Figur 3 gekennzeichneten Erdschluss im Bereich der Spannungsquelle 120, so liegt deren Spannung Uh unmittelbar zwischen dem Gemeinschaftspotential GP und dem Erdpotential GND. Letzteres führt wiederum dazu, dass die Spannung zwischen dem Mittenanschluss M des Spannungsteilers 210 ebenfalls auf die Spannung Uh der Spannungsquelle 120 festgelegt wird. Im Falle eines ungünstigen Teilerverhältnisses dergestalt, dass im fehlerfreien Fall gilt:

$$R2/(R1 + R2) = Uh/Uzk$$

wird ein solcher Erdschluss also von der Auswerteinrichtung 230 nicht erkannt werden können, da der Erdschluss keine Veränderung des von der Spannungsmesseinrichtung 220 gelieferten Teilspannungswerts Um bewirkt.

Nur durch die Modulation mittels der Modulationseinrichtung 240 kann der in der Figur 3 gezeigte Erdschluss erkannt werden: Aufgrund der Modulation kommt es im zeitlichen Verlauf nämlich zu der zeitlichen Veränderung des Zwischenkreisspannungswertes Uz, die die Auswerteinrichtung 230 erwartet. Tritt eine solche Veränderung im Teilspannungsmesswert Um nicht auf, so ist dies ein Indiz dafür, dass aufgrund eines Erdschlusses am ersten Anschluss Q1 der Spannungsquelle 120 tatsächlich nicht die Teilspannung Ur der Zwischenkreisspannung Uzk, sondern stattdessen tatsächlich die Spannung Uh der Spannungsquelle 120 gemessen wird. In einem solchen Fall wird die Auswerteinrichtung 230 ein Warnsignal SW1 erzeugen, das anzeigt, dass der erste Anschluss Q1 der Spannungsquelle 120 von einem Erdschluss betroffen ist.

Mit anderen Worten wird also die Auswerteinrichtung 230 das Warnsignal SW1 vorzugsweise dann erzeugen,

- wenn sich der Teilspannungswert Um über ein vorgegebenes Maß hinaus nicht proportional zum Zwischenkreisspannungswert Uz verhält,
- wenn die zeitliche Ableitung dUm/dt des Teilspannungswerts Null beträgt oder eine vorgegebene Schwelle unterschreitet und/oder
- wenn gilt

$$\left| \frac{Um}{Uzk} - \frac{R1}{R1 + R2} \right| > S1$$

wobei S1 einen ersten vorgegebenen Schwellenwert bezeichnet.

Das Warnsignal SW1 wird vorzugsweise nur dann erzeugt, wenn der Teilspannungswert Um als solcher betragsmäßig größer als Null, insbesondere größer als eine vorgegebene Schwelle, ist.

Wenn der Teilspannungswert Um hingegen dem Zwischenkreisspannungswert Uz gleicht bzw. gilt:

$$|Um - Uz| < S2$$

wobei S2 einen zweiten vorgegebenen Schwellenwert bezeichnet, so erzeugt die Auswerteinrichtung 230 vorzugsweise ein Warnsignal SW2, das anzeigt, dass der erste Anschluss 61 des Gleichspannungszwischenkreises 60 von einem Erdschluss betroffen ist.

Wenn der Teilspannungswert Um Null beträgt bzw. gilt:

$$|Um| < S3$$

wobei S3 einen dritten vorgegebenen Schwellenwert bezeichnet, so erzeugt die Auswerteinrichtung 230 vorzugsweise ein Warnsignal SW3, das anzeigt, dass das Gemeinschaftspotential GP von einem Erdschluss betroffen ist.

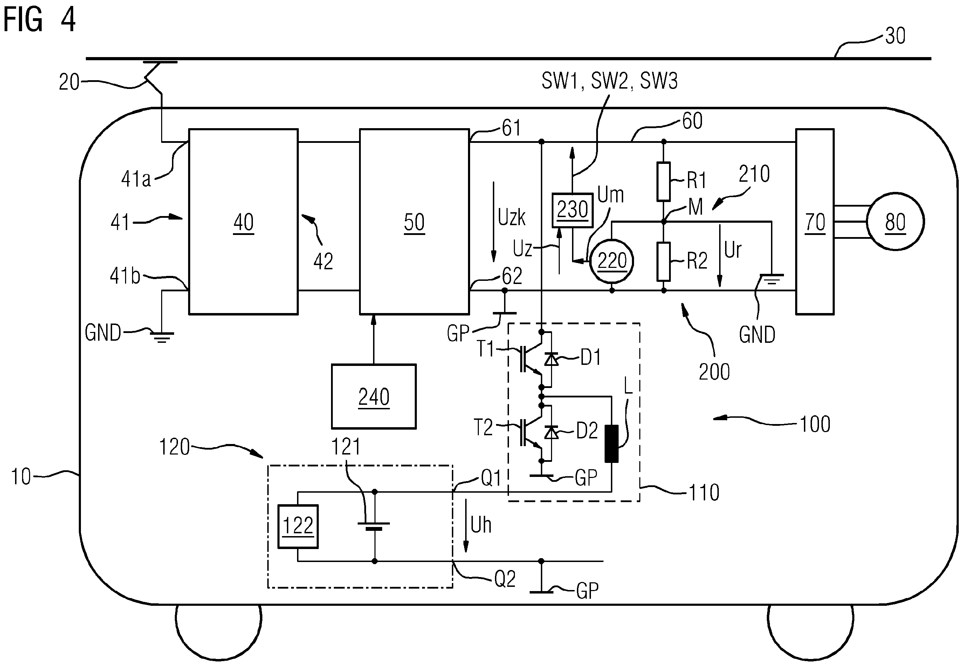

Die Figur 4 zeigt eine Ausführungsvariante des in den Figuren 1 und 3 gezeigten Ausführungsbeispiels.

Bei dem Ausführungsbeispiel gemäß Figur 4 ist die Modulationseinrichtung 240 nicht an die beiden Transistoren T1 und T2 des Gleichspannungswandlers 110 angeschlossen, sondern stattdessen an den Vierquadrantensteller 50. Eine Modulation der Zwischenkreisspannung Uzk des Gleichspannungszwischenkreises 60 erfolgt hier also durch eine Beeinflussung der Arbeitsweise des Vierquadrantenstellers 50; ansonsten gelten die obigen Ausführungen im Zusammenhang mit der Erzeugung der Warnsignale SW1, SW2 oder SW3, wie sie im Zusammenhang mit den Figuren 1 und 3 erläutert wurde, bei dem Ausführungsbeispiel gemäß Figur 4 entsprechend.

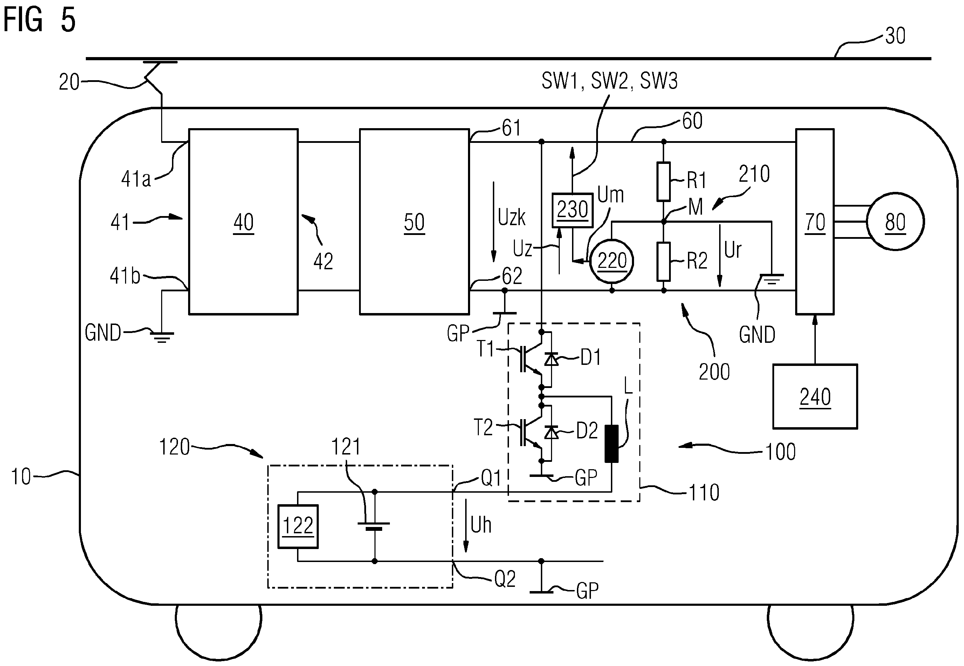

Die Figur 5 zeigt eine Ausführungsvariante des in den Figuren 1 und 3 gezeigten Ausführungsbeispiels. Bei dem Ausführungsbeispiel gemäß Figur 5 ist die Modulationseinrichtung 240 nicht an die beiden Transistoren T1 und T2 des Gleichspannungswandlers 110 angeschlossen, sondern stattdessen an den Umrichter 70. Eine Modulation der Zwischenkreisspannung Uzk des Gleichspannungszwischenkreises 60 erfolgt hier also durch eine Beeinflussung der Arbeitsweise des Umrichters 70; ansonsten gelten die obigen Ausführungen im Zusammenhang mit der Erzeugung der Warnsignale SW1, SW2 oder SW3, wie sie im Zusammenhang mit den Figuren 1 und 3 erläutert wurde, bei dem Ausführungsbeispiel gemäß Figur 5 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 10 | Schienenfahrzeug |
| 20 | Stromabnehmer |
| 30 | externes Energieversorgungsnetz |
| 40 | Transformator |
| 41 | erste Anschlussseite |
| 41a | Anschluss |
| 41b | Anschluss |
| 42 | zweite Anschlussseite |
| 50 | Vierquadrantensteller |
| 51 | erste Anschlussseite |
| 52 | zweite Anschlussseite |
| 60 | Gleichspannungszwischenkreis |
| 61 | erster Anschluss |
| 62 | zweiter Anschluss |
| 70 | Umrichter |
| 80 | Antriebsmotor |
| 100 | Hilfseinrichtung |
| 110 | Gleichspannungswandler |
| 120 | Spannungsquelle |
| 121 | Batterie |
| 122 | Brennstoffzelle |
| 200 | Erdschlusserkennungseinrichtung |
| 210 | Spannungsteiler |
| 220 | Spannungsmesseinrichtung |
| 230 | Auswerteinrichtung |
| 240 | Modulationseinrichtung |
| | |
| D1 | Freilaufdiode |
| D2 | Freilaufdiode |
| GND | Erdpotential |
| GP | Gemeinschaftspotential |
| L | Induktivität |
| M | Mittenanschluss |
| MAX | Maximalwert |
| MIN | Mindestwert |
| Q1 | Anschluss |
| Q2 | Anschluss |
| R1 | Teilerelement |
| R2 | Teilerelement |
| SW1 | Warnsignal |
| SW2 | Warnsignal |
| SW3 | Warnsignal |
| t | Zeit |
| T1 | Transistor |
| T2 | Transistor |
| Uh | Spannung |
| Um | Teilspannungswert |
| Ur | Teilspannung |
| Uz | Zwischenkreisspannungswert |
| Uzk | Zwischenkreisspannung |

**Patentansprüche**

1. Fahrzeug (10) mit

   - einem Gleichspannungszwischenkreis (60) und
   - zumindest einer Hilfseinrichtung (100), die einen Gleichspannungswandler (110) und eine mittels des Gleichspannungswandlers (110) an den Gleichspannungszwischenkreis (60) angeschlossene Spannungsquelle (120) aufweist,

   **dadurch gekennzeichnet, dass**
   an den Gleichspannungszwischenkreis (60) eine Erdschlusserkennungseinrichtung (200) angeschlossen ist, die umfasst:

   - einen Spannungsteiler (210), der mit einem Mittenanschluss (M) auf Erdpotential (GND) liegt,
   - eine an ein Teilerelement (R2) des Spannungsteilers (210) (210) angeschlossene Spannungsmesseinrichtung (220),
   - eine Modulationseinrichtung (240), die die Zwischenkreisspannung (Uzk) des Gleichspannungszwischenkreises (60) zeitlich moduliert und

- eine Auswerteinrichtung (230), die anhand eines die Spannung an dem Teilerelement (R2) angebenden Teilspannungswerts (Um) und einem die modulierte Zwischenkreisspannung (Uzk) am Gleichspannungszwischenkreis (60) angebenden modulierten Zwischenkreisspannungswerts (Uz) ermittelt, ob einer der Anschlüsse (Q1, Q2, 61, 62) der Spannungsquelle (120) oder des Gleichspannungszwischenkreises (60) von einem Erdschluss betroffen ist.

2. Fahrzeug (10) nach Anspruch 1,
   **dadurch gekennzeichnet, dass**
   die Modulationseinrichtung (240) die Zwischenkreisspannung (Uzk) des Gleichspannungszwischenkreises (60) zeitlich rampenförmig oder sägezahnförmig moduliert.

3. Fahrzeug (10) nach einem der voranstehenden Ansprüche,
   **dadurch gekennzeichnet, dass**
   die Modulationseinrichtung (240) die Zwischenkreisspannung (Uzk) des Gleichspannungszwischenkreises (60) periodisch jeweils von einem vorgegebenen Mindestwert (MIN), der vorzugsweise zwischen 1000 V und 1500 V liegt, linear bis zu einem vorgegebenen Maximalwert (MAX), der vorzugsweise zwischen 1500 V und 2000 V liegt, erhöht und anschließend von dem Maximalwert (MAX) wieder auf den Mindestwert (MIN) linear gesenkt.

4. Fahrzeug (10) nach einem der voranstehenden Ansprüche,
   **dadurch gekennzeichnet, dass**
   das Erhöhen und Absenken der Zwischenkreisspannung (Uzk) mit derselben Flankensteilheit erfolgt.

5. Fahrzeug (10) nach einem der voranstehenden Ansprüche,
   **dadurch gekennzeichnet, dass**
   die Auswerteinrichtung (230) ein einen Erdschluss anzeigendes Erdschlusssignal erzeugt, wenn sich der Teilspannungswert (Um) über ein vorgegebenes Maß hinaus nicht proportional zum Zwischenkreisspannungswert (Uz) verhält.

6. Fahrzeug (10) nach einem der voranstehenden Ansprüche,
   **dadurch gekennzeichnet, dass**
   die Auswerteinrichtung (230) ein einen Erdschluss anzeigendes Erdschlusssignal erzeugt, wenn die zeitliche Ableitung des Teilspannungswerts (Um) Null beträgt oder eine vorgegebene Schwelle unterschreitet.

7. Fahrzeug (10) nach einem der voranstehenden Ansprüche,
   **dadurch gekennzeichnet, dass**

die Auswerteinrichtung (230) ein einen Erdschluss anzeigendes Erdschlusssignal erzeugt, wenn gilt:

$$\left| \frac{Um}{Uzk} - \frac{R1}{R1+R2} \right| > S1$$

wobei R1 und R2 Widerstandswerte des Spannungsteilers (210), Uzk die Zwischenkreisspannung (Uzk), Um den Teilspannungswert und S1 einen Schwellenwert bezeichnen.

8. Fahrzeug (10) nach einem der voranstehenden Ansprüche,
   **dadurch gekennzeichnet, dass**

   - ein erster Anschluss (Q1) der Spannungsquelle (120) und ein erster Anschluss (61) des Gleichspannungszwischenkreises (60) auf unterschiedlichem Potential liegen und ein zweiter Anschluss (Q2) der Spannungsquelle (120) und ein zweiter Anschluss (62) des Gleichspannungszwischenkreises (60) auf einem gemeinsamen Gemeinschaftspotential (GP) liegen,
   - der Teilspannungswert (Um) die Spannung zwischen dem Erdpotential (GND) und dem Gemeinschaftspotential (GP) anzeigt,
   - die Auswerteinrichtung (230) ein Warnsignal (SW2) erzeugt, das anzeigt, dass der erste Anschluss (61) des Gleichspannungszwischenkreises (60) von einem Erdschluss betroffen ist, wenn der Teilspannungswert (Um) dem Zwischenkreisspannungswert (Uz) gleicht,
   - die Auswerteinrichtung (230) ein Warnsignal (SW1) erzeugt, das anzeigt, dass der erste Anschluss (Q1) der Spannungsquelle (120) von einem Erdschluss betroffen ist, wenn der Teilspannungswert (Um) und der Zwischenkreisspannungswert (Uz) sich nicht proportional verhalten, insbesondere die zeitliche Ableitung (dUm/dt)) des Teilspannungswerts (Um) nach der Zeit (t) Null beträgt, und
   - die Auswerteinrichtung (230) ein Warnsignal (SW3) erzeugt, das anzeigt, dass das Gemeinschaftspotential (GP) von einem Erdschluss betroffen ist, wenn der Teilspannungswert (Um) Null beträgt.

9. Fahrzeug (10) nach einem der voranstehenden Ansprüche,
   **dadurch gekennzeichnet, dass**
   die Modulationseinrichtung (240) die Zwischenkreisspannung (Uzk) durch Ansteuerung des Gleichspannungswandlers (110) moduliert.

10. Fahrzeug (10) nach einem der voranstehenden Ansprüche,
    **dadurch gekennzeichnet, dass**

die Modulationseinrichtung (240) die Zwischenkreisspannung (Uzk) durch Ansteuerung eines an den Gleichspannungszwischenkreis (60) angeschlossenen Umrichters (70), über den ein Antriebsmotor (80) an den Gleichspannungszwischenkreis (60) angeschlossen ist, moduliert.

11. Fahrzeug (10) nach einem der voranstehenden Ansprüche,
    **dadurch gekennzeichnet, dass**
    die Modulationseinrichtung (240) die Zwischenkreisspannung (Uzk) durch Ansteuerung eines an den Gleichspannungszwischenkreis (60) angeschlossenen Vierquadrantenstellers (50), über den ein Transformator (40) an den Gleichspannungszwischenkreis (60) angeschlossen ist, moduliert.

12. Fahrzeug (10) nach einem der voranstehenden Ansprüche,
    **dadurch gekennzeichnet, dass**
    die Anschlüsse des Gleichspannungszwischenkreises (60) im fehlerfreien Zustand potentialfrei sind.

13. Fahrzeug (10) nach einem der voranstehenden Ansprüche,
    **dadurch gekennzeichnet, dass**

    - die Spannungsquelle (120) durch eine Brennstoffzelle (122) gebildet ist oder eine solche zumindest auch umfasst und/oder
    - die Spannungsquelle (120) durch eine Batterie (121) gebildet ist oder eine solche zumindest auch umfasst.

14. Verfahren zur Erdschlussüberwachung eines Gleichspannungszwischenkreises (60) eines Fahrzeugs (10), an den zumindest eine Hilfseinrichtung (100), die einen Gleichspannungswandler (110) und eine mittels des Gleichspannungswandlers (110) an den Gleichspannungszwischenkreis (60) angeschlossene Spannungsquelle (120) aufweist, angeschlossen ist,
    **dadurch gekennzeichnet, dass**

    - ein Spannungsteiler (210) mit einem Mittenanschluss (M) auf Erdpotential (GND) liegt,
    - ein die Spannung an einem Teilerelement (R2) des Spannungsteilers (210) angebender Teilspannungswert (Um) gemessen wird,
    - die Zwischenkreisspannung (Uzk) des Gleichspannungszwischenkreises (60) zeitlich moduliert wird, und
    - anhand eines die Spannung an dem Teilerelement (R2) angebenden Teilspannungswerts (Um) und einem die modulierte Zwischenkreisspannung (Uzk) am Gleichspannungszwischenkreis (60) angebenden modulierten Zwischenkreisspannungswerts (Uz) ermittelt wird, ob einer der Anschlüsse der Spannungsquelle (120) oder des Gleichspannungszwischenkreises (60) von einem Erdschluss betroffen sind.

# FIG 1

EP 4 015 281 A1

# FIG  2

EP 4 015 281 A1

FIG 3

EP 4 015 281 A1

FIG 4

EP 4 015 281 A1

# FIG 5

EP 4 015 281 A1

Europäisches Patentamt
European Patent Office
Office européen des brevets

# EUROPÄISCHER RECHERCHENBERICHT

**Nummer der Anmeldung**

EP 21 21 2688

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 109 782 129 A (CHINA ACADEMY RAILWAY SCIENCES CORP LTD ET AL.) 21. Mai 2019 (2019-05-21) * Zusammenfassung * * Absatz [0002] - Absatz [0003] * * Absatz [0071] - Absatz [0082] * * Absatz [0089] - Absatz [0092] * * Absatz [0136] - Absatz [0156] * * Absatz [0173] - Absatz [0178] * * Ansprüche 1-9 * * Abbildungen 1-10,17-29 * ----- | 1-8, 10-12,14 | INV. B60L9/24 B60L3/00 B60L50/14 B60L50/51 B60L50/71 B60L50/75 B60L50/60 |
| X | JP 2018 182918 A (RAILWAY TECHNICAL RES INST; TOYO ELECTRIC MFG CO LTD) 15. November 2018 (2018-11-15) * Zusammenfassung * * Absatz [0009] - Absatz [0011] * * Absatz [0019] - Absatz [0029] * * Absatz [0042] - Absatz [0049] * * Absatz [0067] - Absatz [0072] * * Absatz [0084] - Absatz [0090] * * Abbildungen 1-8 * ----- | 1-6,9-14 | |
| X | CN 110 703 138 A (CRRC QINGDAO SIFANG ROLLING STOCK RES INST CO LTD) 17. Januar 2020 (2020-01-17) * Zusammenfassung * * Absatz [0009] - Absatz [0015] * * Absatz [0041] - Absatz [0042] * * Absatz [0058] - Absatz [0060] * * Absatz [0063] - Absatz [0077] * * Abbildungen 2-4b * ----- -/-- | 1-7, 10-12,14 | RECHERCHIERTE SACHGEBIETE (IPC) B60L G01R H02H |

Der vorliegende Recherchenbericht wurde für alle Patentansprüche erstellt

| Recherchenort | Abschlußdatum der Recherche | Prüfer |
|---|---|---|
| Den Haag | 11. Mai 2022 | Molnar, Sabinus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................
& : Mitglied der gleichen Patentfamilie, übereinstimmendes Dokument

EPO FORM 1503 03.82 (P04C03)

Seite 1 von 2

**EUROPÄISCHER RECHERCHENBERICHT**

Nummer der Anmeldung

EP 21 21 2688

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CN 111 766 534 A (CRRC YONGJI ELECTRIC CO LTD) 13. Oktober 2020 (2020-10-13) * Zusammenfassung * * Absatz [0017] – Absatz [0034] * * Absatz [0051] – Absatz [0074] * * Absatz [0088] – Absatz [0094] * * Abbildungen 1-3 * ----- | 1-14 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 11. Mai 2022 | Molnar, Sabinus |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
....................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 21 21 2688

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2022

| Im Recherchenbericht angeführtes Patentdokument | Datum der Veröffentlichung | Mitglied(er) der Patentfamilie | Datum der Veröffentlichung |
|---|---|---|---|
| CN 109782129 A | 21-05-2019 | KEINE | |
| JP 2018182918 A | 15-11-2018 | JP 6744836 B2 | 19-08-2020 |
| | | JP 2018182918 A | 15-11-2018 |
| CN 110703138 A | 17-01-2020 | KEINE | |
| CN 111766534 A | 13-10-2020 | CN 111766534 A | 13-10-2020 |
| | | WO 2021248839 A1 | 16-12-2021 |

Für nähere Einzelheiten zu diesem Anhang : siehe Amtsblatt des Europäischen Patentamts, Nr.12/82

EPO FORM P0461